# EUROPÄISCHE PATENTSCHRIFT

(11) **EP 1 307 367 B1**
(45) Veröffentlichungstag und Bekanntmachung des Hinweises auf die Patenterteilung: **11.09.2013**
(21) Anmeldenummer: 01956571.2
(22) Anmeldetag: 27.07.2001
(51) Int. Cl.: B60T 7/04, B60T 17/18

(54) **SYSTEM, POSITIONSGEBER UND EMPFANGSEINRICHTUNG ZUR SICHEREN ÜBERTRAGUNG DER POSITION EINES BETÄTIGUNGSELEMENTS SOWIE DESSEN VERWENDUNG**
SYSTEM, POSITION TRANSMITTER AND A RECEIVING DEVICE FOR RELIABLY TRANSMITTING THE POSITION OF A CONTROL ELEMENT, AND THE USE THEREOF
SYSTEME, CAPTEUR DE POSITION ET DISPOSITIF DE RECEPTION PERMETTANT LA TRANSMISSION SECURISEE DE LA POSITION D'UN ELEMENT D'ACTIONNEMENT, AINSI QUE SON UTILISATION

(30) Priorität: 28.07.2000 DE 10037259; 28.07.2000 DE 10037258; 15.05.2001 DE 10123730; 15.05.2001 DE 10123737
(43) Veröffentlichungstag der Anmeldung: 07.05.2003
(73) Patentinhaber: Continental Teves AG & Co. oHG, 60488 Frankfurt am Main (DE)
(72) Erfinder: LOHBERG, Peter, 61381 Friedrichsdorf (DE); FEY, Wolfgang, 65527 Niedernhausen (DE); ENGELMANN, Mario, 61449 Steinbach/Ts. (DE); RINK, Klaus, 63517 Rodenbach (DE); BECKMANN, Tobias, 65760 Eschborn (DE)
(86) Internationale Anmeldenummer: PCT/EP2001/008751
(87) Internationale Veröffentlichungsnummer: WO 2002/009989

(56) Entgegenhaltungen:
- WO-A-00/10848
- DE-A- 19 829 126
- US-A- 5 668 331

## Beschreibung

Die Erfindung betrifft ein System zur sicheren Übertragung der Position eines Betätigungselements an eine elektronische Verarbeitungseinheit über elektrische Signalleitungen sowie die Verwendung eines solchen Systems in einer Kraftfahrzeugbremsanlage, in der die Positionssignale eines Bremspedals überwiegend mittels elektrischer Signale an eine Bremsensteuerungseinrichtung übertragen werden.

Heutige Kraftfahrzeuge sind überwiegend mit Bremsanlagen ausgerüstet, in denen eine Übertragung des Bremspedaldrucks zu den Bremszylindern - meist von einem Bremskraftverstärker verstärkt- über Hydraulikleitungen erfolgt.

In Kraftfahrzeugen der nächsten Generation wird bei einer Bremsanforderung des Fahrers das Bewegungssignal des Bremssignalgebers nicht mehr ausschließlich hydraulisch an eine (hydraulische oder elektrische) Bremsensteuerungseinrichtung übertragen, sondern mittels elektrischer Leitungen (x-bywire). Bei der Elektrohydraulischen Bremse (EHB) kann neben einer elektrischen Signalübertragung für einen Notbetrieb zwischen Bremspedal und Bremsensteuergerät zusätzlich zur elektrischen Leitung eine Hydraulikleitung vorgesehen sein.

An die Funktionssicherheit einer Kraftfahrzeugbremsanlage werden sehr hohe Anforderungen gestellt. Deshalb muß auch die elektronische Erfassung der Position eines Bremssignalgebers ausgesprochen genau und zuverlässig erfolgen.

Ein elektronisches System zur Erfassung der Position eines Bremssignalgebers muß zudem einen niedrigen Ruhestromverbrauch aufweisen, damit die in der Regel begrenzte Energiekapazität eines Energiespeichers im Kraftfahrzeug nicht übermäßig belastet wird. Weiterhin muß sich ein entsprechendes System schnell und zuverlässig aktivieren lassen, wenn eine Bremsdruckanforderung durch Bewegung des Bremssignalgebers stattfindet oder andere externe Ereignisse, wie das Starten des Motors auf eine bevorstehende Bremsdruckanforderung schließen lassen.

Es sind bereits Systeme zur Übertragung eines Bremssignals bekannt, bei denen Potentiometer zur Erfassung der absoluten Position des Bremspedals verwendet werden und eine Übertragung das Positionssignal analog an eine Verarbeitungseinheit analog erfolgt. Diese Systeme weisen unter anderem den Nachteil auf, daß sie gegenüber Störungen besonders empfindlich sind. Weiterhin sind die übertragenen Positionssignale aufgrund von Hysterese und Verschleiß der Potentiometerkontakte nicht ausreichend genau bzw. dauerhaft verfügbar.

Weiterhin sind neben den vorstehend beschriebenen passiven Systemen aktive Systeme zur Wegmessung bekannt, die schaltungstechnisch erheblich aufwendiger sind, und infolgedessen einen für den Dauerbetrieb zu hohen Ruhestromverbrauch aufweisen.

Druckschrift US 5,668,331 offenbart einen Positionsgeber mit zwei Sensorelementen, mit denen die Position eines Pedals erfasst wird, wobei die Position des Pedals aus der Phasendifferenz der Sensorelementausgangssignale ermittelt wird.

In Druckschrift DE 198 29 126 A1 wird ein Bremssystem vorgeschlagen, das implizit eine Empfangseinrichtung zum Empfangen eines, über eine oder mehrere elektrische Leitungen übertragenen, Positionssignals umfasst.

Der Erfindung liegt die Aufgabe zu Grunde, ein System vorzuschlagen, das die elektrische Energieversorgung relativ wenig belastet.

Die Erfindung betrifft ein System zur sicheren Übertragung der Position eines Betätigungselements an eine elektronische Verarbeitungseinheit, wobei die Verarbeitungseinheit insbesondere in einer Bremsensteuerungseinrichtung (ECU) integriert ist, gemäß Anspruch 1.

Das erfindungsgemäße System besitzt zur Erhöhung der Betriebsicherheit zwei oder mehrere Kanäle. Besonders bevorzugt wird das System mit drei Kanälen ausgelegt. Um eine weitgehende Unabhängigkeit der Kanäle zu erreichen, sind zweckmäßigerweise auch die den Kanälen zugeordneten Spannungsversorgungen unabhängig konzipiert. Durch die redundante Auslegung wichtiger Systemfunktionen wird eine deutliche Erhöhung der Zuverlässigkeit erzielt.

Die Übertragung der Signale erfolgt über elektrische Signalleitungen, welche in mehrere Signalkanäle aufgeteilt sind. Unter dem Begriff "elektrische Signalleitungen" werden neben elektrischen Leitungen auch drahtlose an sich bekannte Mittel zur Übertragung von elektrischen Signalen verstanden, wie z.B. moderne Bussysteme nach der Blue-Tooth-Technologie etc. Ebenfalls werden von dem Begriff Signalleitungen umfaßt, die die Signale optisch, z.B. über Glasfasern, übertragen.

Nach einer bevorzugten Ausführungsform besitzt zumindest ein Signalkanal eine niedrigere Ortsauflösung als der oder die weiteren Signalkanäle. Der Kanal mit der niedrigeren Ortsauflösung kann auf diese Weise mit einem geringeren Stromverbrauch dauerhaft betrieben werden.

Im System gemäß der Erfindung werden vorzugsweise die über die Signalleitungen übertragenen Signale mittels eines weiter unten beschriebenen Positionsgebers erzeugt. Die vom Positionsgeber erzeugten Signale werden dann mit einer ebenfalls weiter unten beschriebenen Empfangseinrichtung empfang-gen.

Vorzugsweise ist das System so gestaltet, daß dieses unterschiedliche Betriebszustände einnehmen kann. Die Betriebszustände unterscheiden sich durch einen unterschiedlichen Energieverbrauch voneinander. Besonders bevorzugt unterscheiden sich die Betriebszustände dadurch, daß die Taktrate eines Filterelements am Eingang der Empfangsschaltung unterschiedlich ist.

In einer bevorzugten Ausführungsform der Erfindung ist das System mit einer Weckfunktion ausgestattet. Eine Aktivierung des Systems bzw. Teilen des Systems kann entweder durch ein zulässiges Wecksignal im ersten Kanal, wie beispielsweise ein Rechteckimpuls vom Positionsgeber, oder durch andere Ereignisse, wie Zündung, Zentralentriegelung, Türöffner etc. erfolgen. Vor dem Empfang eines Wecksignals ist das System in einem Zustand mit niedrigem Energieverbrauch. In diesem Zustand sind lediglich einzelne oder auch alle Funktionsgruppen eines ersten Kanals aktiv bzw. eingeschränkt aktiv. Diese Funktionsgruppen im Zustand mit niedrigem Energieverbrauch weisen Weckmittel auf, mit denen einzelne oder alle Funktionsgruppen weiterer Kanäle in einen Zustand mit höherem Energieverbrauch versetzt werden können, bei dem insbesondere die volle Funktionalität des Gesamtgeräts hergestellt ist. Die Weckfunktion ermöglicht den Dauerbetrieb der Schaltungsanordnung in einem schlafenden Modus ("sleepmode") mit niedrigem Energieverbrauch bei gleichzeitiger Aktivierbarkeit ("Wake-up") weiterer Kanäle mit vergleichsweise höherer Auflösung. Zudem wird im aktivierten Betrieb die geforderte Redundanz des Systems zur Verfügung gestellt.

Es kann besonders zweckmäßig sein, den Kanal mit der Weckfunktion mit einem zweistufig arbeitenden Weckmittel auszustatten, bei dem nach dem Empfang eines beliebigen Signals zunächst eine erste Stufe in der Schaltung des Weckmittels aktiviert wird, welche eine vorläufige Überprüfung auf ein zulässiges Wecksignals vornimmt. Dies kann z.B. eine einfache Komparatorschaltung sein, die den Signalpegel mit einer zulässigen Schwellenspannung vergleicht und bei Überschreiten der Schwelle die zweite Stufe anschaltet.

In der zweiten Stufe des Weckmittels wird dann eine weitere, genauere Überprüfung der Zulässigkeit des empfangenen Signals durchgeführt, beispielsweise mittels eines digitalen Filters. Ein weiteres Beispiel für eine zweistufige Schaltungsanordnung zum Wecken geht aus der am gleichen Tag eingereichten Deutschen Patentanmeldung P .......... (Anmelder: Continental Teves AG & Co. oHG, Titel: "Verfahren und Schaltungsanordnung zur Aktivierung von deaktivierten Schaltungsmodulen und deren Verwendung", Aktenzeichen noch nicht bekannt) hervor.

Gemäß der Erfindung wird vorzugsweise nur ein Kanal mit Mitteln zum Wecken eines weiteren Kanals oder weiterer Kanäle ausgestattet.

In einer bevorzugten Weiterbildung des Systems ist eine insbesondere auf der Empfangseinrichtung angeordnete Überwachungsschaltung vorgesehen, welche einige ausgewählte Systemfunktionen überwacht und in Abhängigkeit vom Ergebnis der Überwachung einen Notbetrieb oder eine Abschaltung des Systems hervorruft.

Vorzugsweise sind die Ausgangsstufen des Positionsgebers und die Eingangsstufen der Empfangseinrichtung bezüglich einer gemeinsamen Strom-/Spannungsversorgung ratiometrisch aufgebaut.

Unter dem Begriff "ratiometrisch" wird im Sinne der Erfindung verstanden, daß am Ausgang eines Kanals der Leistungs-treiberstufe im Positionsgeber der Spannungspegel an die Pegel der Spannungsversorgung angepaßt wird. Hierdurch ändert sich die Ausgangsspannung bzw. der Ausgangspegel des Kanals zu einer Änderung der Versorgungsspannung im gleichen Verhältnis (linear).

In der Empfangseinrichtung werden die Eingangsstufen der Kanäle ebenfalls so aufgebaut, daß diese sich bezüglich Ihrer Empfindlichkeit im gleichen Verhältnis wie die Versorgungsspannung verhalten. Hierdurch kann bei Betrieb von Positionsgeber und Empfangseinrichtung mit der gleichen Spannungsversorgung vermieden werden, daß durch unterschiedliche Spannungspegel hervorgerufenen Pegelschwankungen des Signals zu einer Fehlinterpretation im Komparator der Empfangsschaltung führen. Selbstverständlich läßt sich die vorstehend beschriebene Ratiometrie nur innerhalb eines geeigneten Versorgungsspannungsbereiches einhalten.

In einer bevorzugten Weiterbildung des Systems ist vorgesehen, daß die in den Kanälen des Positionsgebers vorhandenen Funktionsgruppen von jeweils einer von der Empfangseinrichtung gespeisten Strom-/Spannungsversorgungsleitung versorgt werden.

Die Erfindung betrifft auch einen Positionsgeber zum Senden von Positionssignalen über einen oder mehrere Kanäle mit mindestens einem von einem Betätigungselement relativ zu einem oder mehreren Magnetwandlern verschiebbaren magnetischen Encoder, wobei der Encoder entlang der Verschiebungsrichtung magnetische Zonen aufweist, wobei der oder die Magnetwandler gemeinsam mit einer vollständig oder teilweise integrierten elektronischen Signalaufbereitungsschaltung in einer elektronischen Sensorbaugruppe angeordnet sind und die Signalaufbereitungsschaltung in Abhängigkeit von der Position des Betätigungselements codierte Signale an einer oder mehreren Encoder, wobei der Encoder entlang der Verschiebungsrichtung magnetische Zonen aufweist, wobei der oder die Magnetwandler gemeinsam mit einer vollständig oder teilweise integrierten elektronischen Signalaufbereitungsschaltung in einer elektronischen Sensorbaugruppe angeordnet sind und die Signalaufbereitungsschaltung in Abhängigkeit von der Position des Betätigungselements codierte Signale an einer oder mehreren elektrischen Signalleitungen bereitstellt, wobei die Signale impulscodiert sind, wobei ein Impuls erzeugt wird, wenn sich die Position des Betätigungselements entsprechend der Breite einer Zone des Encoders verändert hat.

In der Elektronik des Positionsgebers werden bevorzugt die erzeugten Signale durch Einbeziehung einer Stromversorgung gebildet. Es handelt sich somit um einen aktiven Positionsgeber.

Der im Positionsgeber vorhandene verschiebbare magnetische Encoder (1) weist vorzugsweise entlang der Verschiebungsrichtung magnetische Zonen auf, die gleich lang sind.

Die Magnetwandler zum Abfühlen des Magnetfeldes (z.B. AMR-Brückenschaltungen) setzen die Magnetfeldinformation in ein elektrisches Signal um. Es ist aus Gründen der Redundanz zweckmäßig, wenn mehrere Sensorbaugruppen bestehend aus Magnetwandler und Signalaufbereitungsschaltung vorgesehen sind. Vorzugsweise ist in jeder Sensorbaugruppe genau ein Magnetwandler vorgesehen, wobei dieser, wenn es sich um einen Wandler handelt, der nach dem AMR-Prinzip arbeitet, beispielsweise zwei oder mehrere Brückenschaltungen enthält. In der Sensorbaugruppe ist die elektronische Signalaufbereitungsschaltung zumindest teilweise mit dem Wandlerelement in einem gemeinsamen Gehäuse integriert. Bevorzugt ist jedoch die gesamte Signalaufbereitungsschaltung in der Sensorbaugruppe integriert.

In einer weiteren bevorzugten Ausführungsform sind die Magnetwandler aller Kanäle und die zugeordneten Aufbereitungsschaltungen in einer Sensorbaugruppe integriert. Ganz besonders bevorzugt sind die Aufbereitungsschaltungen auf einem gemeinsamen Chip integriert.

Die mittels des erfindungsgemäßen Positionsgebers erzeugten Signale sind bevorzugt impulscodiert. Es können verschiedenartige Impulssorten vorgesehen sein. Besonders bevorzugt ist die Amplitude und die Pulsbreite in jeder Impulssorte festgelegt. Vorzugsweise unterscheiden sich die Impulssorten in deren Amplitude. Durch die Verwendung von zwei Impulssorten kann eine zusätzliche Signalleitung zur Übertragung eines Bewegungsrichtungssignals eingespart werden.

Zweckmäßigerweise wird ein Impuls durch die Signalaufbereitungsschaltung dann erzeugt, wenn sich die Position des Betätigungselements um die Breite einer Zone des Encoders verändert hat. Hierdurch ergibt sich ein kleinerer Impulsabstand bei zunehmender Bewegungsgeschwindigkeit des Betätigungselements.

Die Erfindung betrifft auch eine Empfangseinrichtung zum Empfangen eines über eine oder mehrere elektrische Leitungen übertragenen Positionssignals, insbesondere von Signalen eines weiter oben beschriebenen Positionsgebers, wobei die Empfangseinrichtung mehrere Verarbeitungskanäle jeweils mit Signaleingängen zur Verarbeitung von jeweils einem Positionssignal umfasst.

In den Verarbeitungskanälen der Empfangseinrichtung sind vorzugsweise Zähler zum Zählen von über die Leitung übertragbarer Signalpulse vorhanden, wobei insbesondere jeder Kanal mit genau einem Zähler ausgestattet ist.

Bevorzugt ist mindestens eine mit den Zählern verbundene Impulsunterscheidungseinrichtung vorhanden, so daß die Zähler aufwärts respektive abwärts gezählt werden, wenn Pulse einer ersten Sorte empfangen werden und die Zähler abwärts respektive aufwärts gezählt werden, wenn Impulse einer zweiten Sorte empfangen werden.

In einer bevorzugten Weiterbildung der Empfangseinrichtung ist eine Unterdrückungseinrichtung zur Unterdrückung von über den oder die Signaleingänge eingespeister Störsignale in einem oder vorzugsweise in allen Kanälen vorgesehen. Die Unterdrückungseinrichtung umfaßt zweckmäßigerweise senderseitig bzw. empfängerseitig einen Stromtreiber, welcher auf die Signalleitung des jeweiligen Kanals einen ständig flie-ßenden Strom aufprägt. In der Empfangseinrichtung (oder alternativ senderseitig) wird dieser Strom mittels eines geeigneten niederohmigen Leitungsabschlusses wieder abgeführt. Zum Abführen des Stroms wird bevorzugt eine Stromsenke in der Schaltung des Empfängers eingesetzt. Des Weiteren ist bevorzugt im Empfänger ein Signalfilter für jeden Kanal vorhanden, mit dem Störsignale aus dem Datensignal herausgefiltert werden können. Vorzugsweise handelt es sich bei dem Signalfilter um ein digitales Filter.

In der Empfangseinrichtung kann im Prinzip jeder Kanal mit einer eigenen Strom-/Spannungsversorgung ausgerüstet sein. Erfindungsgemäß ist es jedoch bevorzugt, daß die Spannungsversorgungen der einzelnen Kanäle in der Empfangsschaltung in einem getrennten Bereich zusammengefaßt sind und diese unabhängig von den Kanälen sind. Es ist zweckmäßig, daß die Spannungsversorgung kanalweise aktivierbare Zellen aufweist, die voneinander unabhängig sind.

In der erfindungsgemäßen Empfangsschaltung wird in jedem Kanal eine Positionsinformation über die Position des Positionsgebers gespeichert. Unterschiedliche Positionsinformationen können beispielsweise durch Störpulse entstehen, die irrtümlich als gültige Inkrementimpulse identifiziert worden sind. Weichen die einzelnen Positionsinformationen voneinander ab, so liegt ein Fehler vor. Ein solcher Fehlerzustand, der von unterschiedlichen Zählerständen herrührt, kann von einer Schaltung des Steuergeräts (z.B. ASIC oder diskrete Schaltung) oder durch eine geeignete Diagnoseroutine (z.B. in einem Mikrorechner implementiert, der die Kanäle unter Berücksichtigung ggf. unterschiedlicher Auflösungen vergleicht.) festgestellt werden.

Zur Beseitigung dieser Fehler ist in einer weiteren bevorzugten Ausführungsform der Empfangsschaltung eine Rekalibrierungseinrichtung vorgesehen, mit der bei einer in den Kanälen unterschiedlich erkannten Position eine Angleichung der gespeicherten Positionsinformationen vorgenommen werden kann. Dies ist beispielsweise durch ein Rücksetzen aller Zähler auf einen neuen gemeinsamen Wert (Reset oder Startwert) möglich.

Vorzugsweise werden in der Rekalibrierungseinrichtung falsch gezählte Impulse bei jedem Nullpunktsdurchgang (vollständige Entlastung des Bremspedals) eliminiert. Dies ist möglich, da die Position des Betätigungselements in der Regel im unbetätigten Zustand in eine mehr oder weniger genau definierte Ausgangslage zurückkehrt. Eine negative Position kann somit ausgeschlossen werden.

Es ist auch möglich, eine Kalibrierung von Fehlern in Richtung der Maximalbetätigung des Betätigungselements vorzunehmen. Hierfür ist ein zusätzlicher absoluter Positionssignalgeber erforderlich.

Ganz besonders bevorzugt wird ein intelligentes Rekalibrierungsverfahren im Mikrorechner der Empfangsschaltung ausgeführt, bei dem der zeitliche Verlauf der Pedalposition, insbesondere die aktuelle Fahrsituation des Fahrzeugs insgesamt, ausgewertet wird. Z.B. läßt sich auswerten, ob eine konstante Position des Bremspedals über eine bestimmte Zeit vorliegt, so daß angenommen werden kann, daß die Bremse nicht betätigt wird. Zusätzlich kann abgefragt werden, ob eine Betätigung des Gaspedals im Kraftfahrzeug vorliegt, was ebenfalls auf eine Nichtbenutzung des Bremspedals hinweist.

Schließlich betrifft die Erfindung die Verwendung des weiter oben beschriebenen erfindungsgemäßen Systems in einer Kraftfahrzeugbremsanlage, in der die Positionssignale eines Bremspedals überwiegend mittels elektrischer Signale an eine Bremsensteuerungseinrichtung übertragen werden (z.B. Elektrohydraulische Bremse oder Elektromechanische Bremse).

Weitere vorteilhafte Ausführungsformen der Erfindung ergeben sich aus der nachfolgenden Figurenbeschreibung und den Unteransprüchen.

Es zeigen
- Fig. 1: eine schematische Darstellung des erfindungsgemäßen Systems,
- Fig. 2: einen erfindungsgemäßen Positionsgeber,
- Fig. 3: einen weiteren erfindungsgemäßen Positionsgeber,
- Fig. 4: ein Beispiel für ein Übertragungsprotokoll zur Übertragung des Positionssignals von einem Positionsgeber zu einer Empfangseinrichtung,
- Fig. 5: ein Beispiel für eine integrierte Schaltung für einen Positionsgeber und eine integrierte Schaltung für eine Empfangseinrichtung, und
- Fig. 6: eine zeitabhängige Darstellung von Signalverläufen während des Wechsels des Systems aus einem ruhenden Zustand mit niedrigem Stromverbrauch in einen aufgeweckten Systemzustand mit höherem Stromverbrauch.

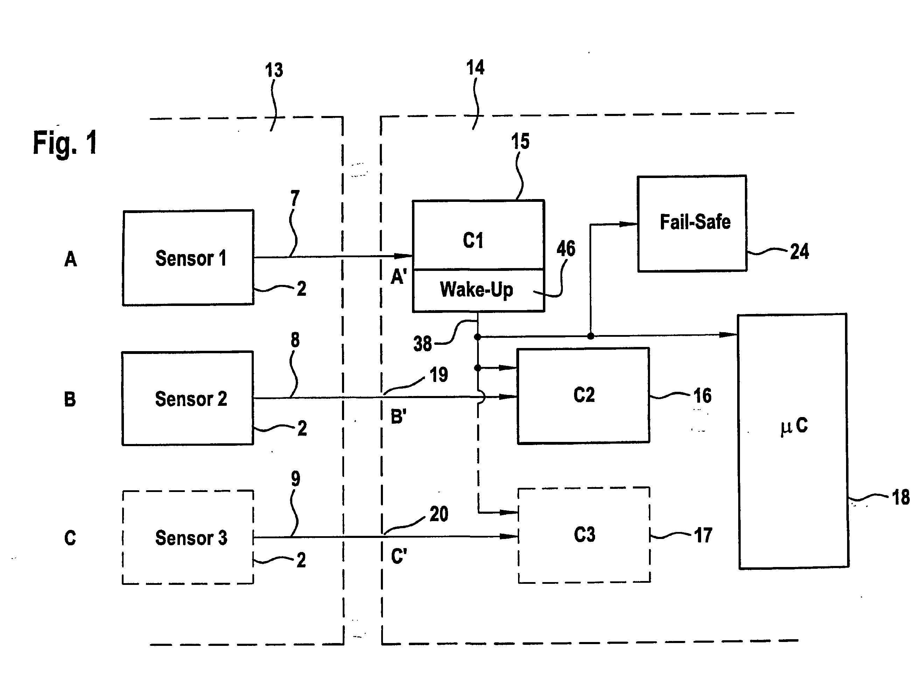

An Hand von Fig. 1 werden die grundlegenden Funktionsblöcke des erfindungsgemäßen Systems beschrieben.

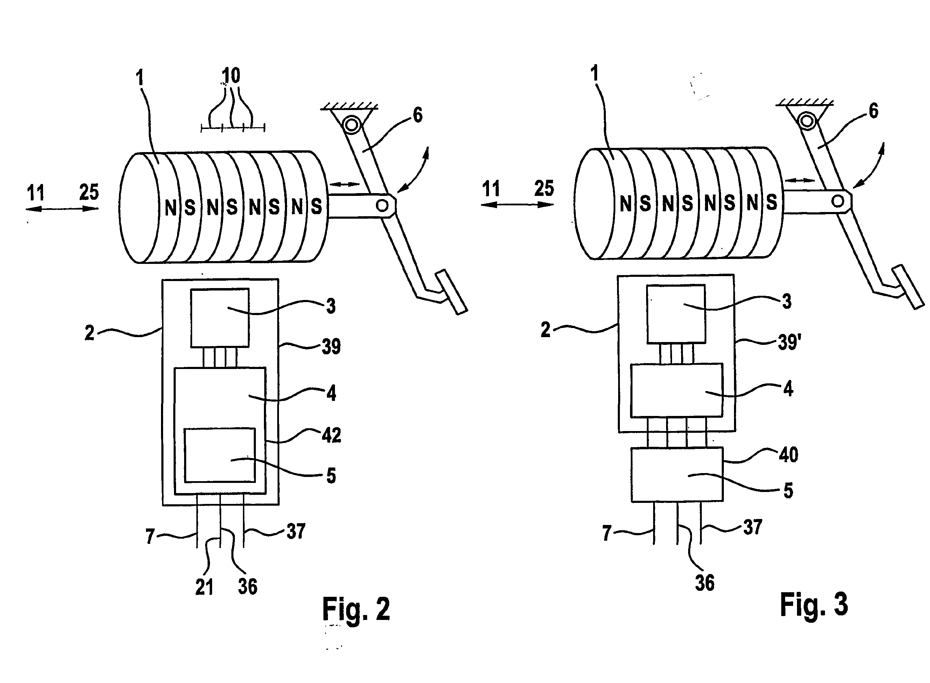

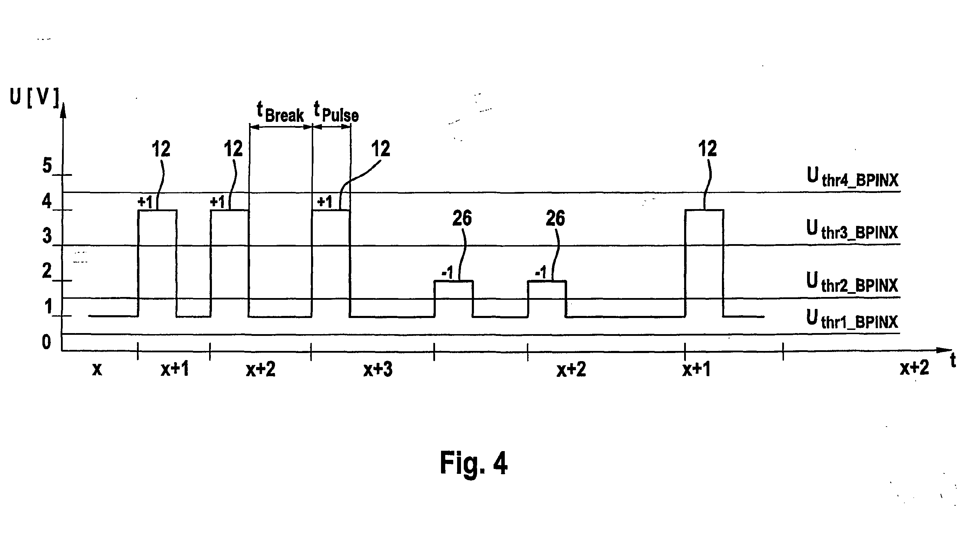

Zur Übertragung der Positionssignale von den in den Figuren 3 und 4 dargestellten Positionsgebern für Bremspedalsensoren werden zwei, insbesondere drei voneinander im wesentlichen vollkommen unabhängige Signalkanäle A,B,C mit jeweils einer Signalleitung 7,8,9 eingesetzt. Der dem Sensorkanal A zugeordnete Kanal A' in der Empfangsschaltung 14 ist für den Betrieb mit einer vergleichsweise geringen Stromaufnahme ausgelegt und permanent in Betrieb. Im schlafenden Zustand sind die übrigen Kanäle deaktiviert, d.h. deren Spannungsversorgung ist ausgeschaltet. Wird in Kanal A' ein gültiges Signal zum Wecken erkannt, so aktiviert die Weckeinrichtung 46 die übrigen Kanäle B' und C' über die Leitung 38, sowie den Mikrorechner 18 und eine Überwachungsschaltung (Fail-Safe-Logik), welche bestimmte Fehlerüberwachungsmaßnahmen, wie Überwachung der Zählerstände der Positionszähler auf eine maximale Abweichung hin sowie Überwachung von Über- und Unterspannungen, ausübt.

Der zurückgelegte Weg des Bremspedals wird von drei unabhängigen Sensorbaugruppen 2 bestimmt. Jede Sensorbaugruppe generiert unabhängig Impulse in Abhängigkeit von definierten Schritten eines gemeinsam abgetasteten Encoders 1 (Fig. 2 und 3). Je nach Bewegungsrichtung des Pedals 6 werden bezüglich der Bewegungsrichtung unterscheidbare rechteckförmige Impulse über die Leitungen 7,8,9 übertragen.

Auf dem Chip 14 werden die Impulse kanalweise dekodiert und Zählern 15, 16, 17 übergeben, welche in Abhängigkeit der Bewegungsrichtung aufwärts oder abwärts zählen. Die Zähler speichern dann die jeweils aktuelle Position des Bremspedals und halten diese Information für eine weitere Verarbeitung durch Mikrorechner 18 bereit.

Es ist bevorzugt, daß die Komponenten der Empfangseinrichtungen auf einem gemeinsamen Chip 14 integriert sind.

Ein geringerer Stromverbrauch von Kanal A' kann durch Auslegung des betreffenden Kanals mit einer geringeren Ortsauflösung erreicht werden. Zähler 15 zählt dann gröbere Positionsveränderungen, als die übrigen Zähler 16 und 17.

In Fig. 2 ist das Prinzip der Erzeugung der Positionssignale schematisch dargestellt. Mittels eines Bremspedals 6 wird ein magnetischer Encoder 1 über eine Schubstange relativ zur Sensorbaugruppe 2 bewegt.

Der in der Sensorbaugruppe zur Umsetzung des magnetischen Signals in ein elektrisches Signal angeordnete Wandler 3 kann beispielsweise nach dem AMR-Prinzip, dem GMR-Prinzip oder dem Hall-Prinzip arbeiten. Die Sensorbaugruppen 2 sind zum Encoder so angeordnet, das jedem Sensormodul entweder eine unterschiedliche Folge von periodisch wechselnden Magnetisierungen von verschiedenen Encodern gegenübersteht oder alle Sensormodule die gleiche Folge von periodisch wechselnden Magnetisierungen eines gemeinsamen Encoders abtasten. Erfindungsgemäß bevorzugt wird ein permanentmagnetischer Encoder mit rohrförmiger Ausbildung eingesetzt. Die Folge wechselnder Magnetisierung wird durch in abwechselnder Richtung magnetisierte Zonen 10 (Nord-/ Südpole) erzeugt, die als äquidistante Ringzonen 10 entlang des Rohrmantels verlaufen. Ein Beispiel für eine erfindungsgemäß bevorzugt einsetzbare mechanische Vorrichtung zur Ermittlung des Pedalwegs mit einem oder mehreren Encodern und Magnetwandlern ist in der Deutschen Patentanmeldung P 10010042.2 (Continental Teves) beschrieben. Je nach Umfang der Auswertung der Nutzung der vom Encoder erzeugten magnetischen Feldlinienverläufe lassen sich auf an sich bekannte Weise Wegsensoren herstellen, die Mittels einer Auswerteelektonik aus dem Magnetfeldsignal ein Ausgangssignal mit jeweils unterschiedlicher Ortsauflösung bereitstellen.

Bei den Wandlerelementen 3 handelt es sich bevorzugt um Sensorelemente auf Basis von AMR-Brücken mit insbesondere zwei Brückenschaltungen in einem Wandler. Die Wandler 3 sind über vier Leitungen mit einer Signalaufbereitungsschaltung 4 verbunden. Die Interpolatoreinheit 4 erzeugt zwei um einen Winkel von 90° verschobene Rechtecksignale, die an die Funktionseinheit 5 übergeben werden. Die Signalaufbereitungsschaltung ist eine geeignete integrierte analoge Signalfolgeschaltungen mit Interpolationsnetzwerk, welche die Bewegungsinformation je nach Bewegungsrichtung über zwei separate Leitungen bereitstellt. Die elektronische Funktionseinheit 5 erzeugt aus den Rechtecksignalen der Interpolatoreinheit 4 eine inkrementale Signalpulsfolge in Abfolge der Ortsinkremente, mit der Besonderheit, daß die zwei Bewegungsrichtungen durch Verwendung von zwei unterschiedlichen Signalamplituden gekennzeichnet werden. Die Sensorbaugruppen 2 übertragen die Information über die Bewegungsrichtung als Bestandteil des Signals der Ortsinkremente über Leitung 7, wobei 36 und 21 Anschlüsse für die Versorgungsspannung sind und 37 zum Anschluß der Masse vorgesehen ist. Die integrierten Schaltungen 4,5 und der Wandler 3 sind in einem gemeinsamen Gehäuse 39 zusammengefaßt.

Im Gegensatz zu Fig. 2, bei der die Sensorbaugruppe 2 so ausgeführt ist, daß der Wandler 3 mit der elektronischen Signalaufbereitungsschaltung aus Interpolatoreinheit 4 und Funktionseinheit 5 zu einer gemeinsamen integrierten Schaltung 42 zusammengefaßt sind, ist im Beispiel von Fig. 3 der Wandler 3 und die Interpolatoreinheit 4 in einem gemeinsamen Gehäuse 39' untergebracht. Die Funktionseinheit 5 ist getrennt von der Anordnung in Gehäuse 39' ausgeführt.

Durch die getrennte Anordnung von Funktionseinheit 5 ergeben sich Kostenvorteile, da die in Gehäuse 39' zusammengefaßte Einheit in der gleichen Ausführung auch als Raddrehzahlsensoren für elektronische Bremsanlagen einsetzbar ist.

In Fig. 4 ist ein Beispiel für ein Signal mit einem Übertragungsprotokoll zur Übertragung des Positionssignals von einem Positionsgeber zu einer Empfangseinrichtung angegeben. Die Bewegung des Encoders in eine erste Richtung 11 (Fig. 2) führt zur Erzeugung von rechteckförmigen Impulsen 12 mit einer Amplitude von 4 V. Jeder Impuls entspricht einer Bewegung des Encoders 1 um eine Zone 10. Bei einer Bewegung in die zweite Richtung 25 werden Rechteckpulse mit einer Amplitude von 2 V erzeugt. Zwischen den Impulsen liegt zur Erkennung von Sensorfehlern und Leitungsfehlern (z.B. Kabelbruch) eine Offsetspannung von U_{offset} = 1 V an, welche mit einer in der Schaltung vorgesehenen Offseteinrichtung erzeugt werden kann. Durch eine Definition der Schnittstelle mit vergleichsweise hohen Signalpegeln im Bereich einer Spannung von 1 bis 4 V läßt sich die Fehlerempfindlichkeit bei der Signalübertragung reduzieren.

Es ist sinnvoll, die Breite der erzeugten Impulse durch die Schaltung in der Weise konstant festzulegen, daß die maximal mögliche Pedalweggeschwindigkeit, welche durch die mechanische Trägheit der Positionsgebervorrichtung nach oben begrenzt ist, noch zuverlässig übertragen werden kann. Zweckmäßigerweise wird die Impulsbreite so gewählt, daß das Verhältnis von Impulsbreite zu Impulspausenbreite (Duty-Cycle) bei maximal möglicher Pedalgeschwindigkeit etwa 50 % beträgt.

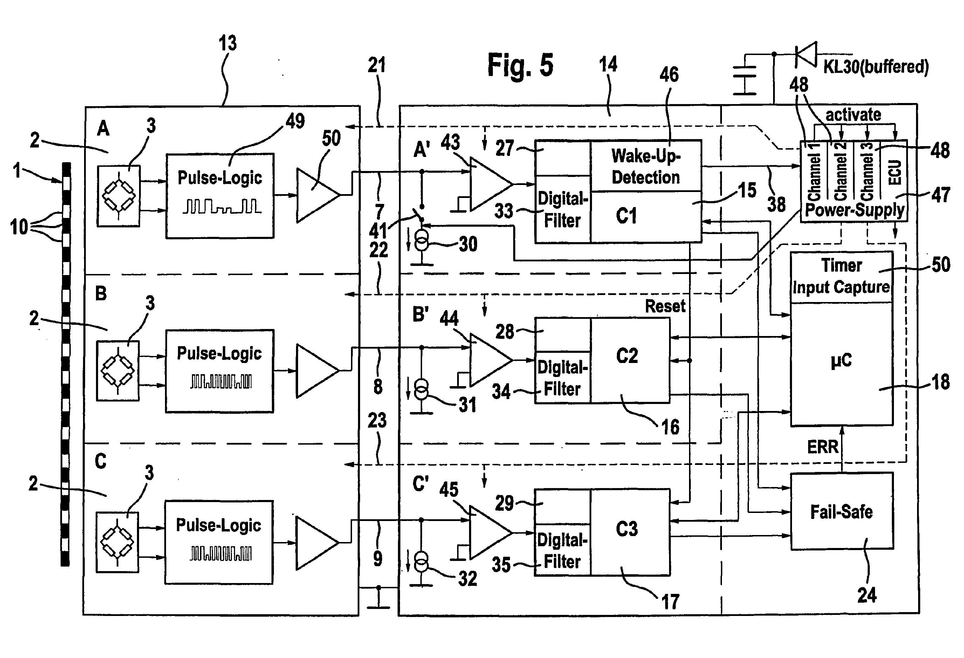

In Fig. 5 ist das Blockschaltbild einer integrierten Schaltung 13 eines Positionsgebers und einer integrierten Schaltung 14 für den Empfang der Signale des Positionsgebers dargestellt. Es ist zweckmäßig, daß die Empfängerschaltung 14 in einem Chip eines elektronischen Bremsensteuergeräts integriert ist.

Der Positionsgeber 13 umfaßt für jeden Kanal ein Wandlerelement 3 mit einer magnetoresistiven Brückenschaltung, eine Inkrement-Erzeugungs-Logik 49 sowie eine Leitungstreiberstufe 50.

Die Impulse des Positionsgebers werden parallel in den Kanälen A, B und C über die Leitungen 7,8 und 9 an die Empfangsschaltung 14 geleitet. Die Stromversorgung des Positionsgebers erfolgt durch die Empfangseinrichtung, vorzugsweise für jeden Kanal getrennt über eine kanalweise zugeordnete Stromversorgungsleitung 21, 22 und 23. Kanal A des Positionsgebers ist so konzipiert, daß die in diesem Kanal erzeugten Impulse mit einer im Vergleich zu den Kanälen B und C definiert niedrigeren Ortsaulösung erzeugt werden. Hierzu kann, was erfindungsgemäß bevorzugt ist, ein eigens hierfür vogesehener Ausgang der Signalaufbereitungsschaltung in der Sensorbaugruppe mit definiert niedrigerer Auflösung genutzt werden. Hierfür geeignete Wegsensoren mit unterschiedlicher Auflösung sind in der bereits weiter oben erwähnten Deutschen Patentanmeldung P 10010042.2 (Continental Teves) beschrieben.

Kanal A des Positionsgebers ist sowohl im schlafenden, als auch im aktivierten Betriebszustand des Systems aktiv. Die Kanäle B und C werden bei einer Aktivierung durch Kanal A über die Stromversorgung 47 der Empfangsschaltung eingeschaltet.

In den Kanälen der Empfangsschaltung werden die Signale eingangsseitig jeweils einer Komparatorstufe 27, 28, 29 zur Unterscheidung der Signalpegel zugeführt.

Mittels einer Offseteinrichtung zur Störunterdrückung wird auf die Signalleitungen ggf. gemeinsam mit einer Offsetspannung ein Offsetstrom mit Leistungstreibern 50 und Stromsenken 30, 31, 32 aufgeprägt, wobei die Stromsenke in Kanal A' im schlafenden Modus über Schalter 41 abgeschaltet werden kann.

Im schlafenden Modus, insbesondere wenn die Zündung nicht betätigt wurde und keine Bremspedalbetätigung vorliegt, ist Kanal A' der Empfangsschaltung eingeschränkt aktiv. Die weiteren Kanäle B' und C' sind durch Abschalten der Stromzuführung deaktiviert. Die Deaktivierung bzw. Aktivierung der Kanäle B und C des Positionsgebers wird über die Stromversorgungsleitungen 22 und 23 durchgeführt.

Mit dem am Ausgang der digitalen Filter 33, 34 und 35 angeordneten Zähler 15, 16 und 17 wird die Anzahl der über die Leitung detektierten Impulse gezählt, wobei die Zähler je nach Signalart "Vorwärts" (Pulsform 12) oder "Rückwärts" (Pulsform 26) entweder aufwärts oder abwärts gezählt werden.

Zur Erkennung von Fehlern während der Datenübertragung ist in der Empfangsschaltung eine Fehlererkennungsschaltung 24 angeordnet, die mit den Zählern 15,16,17 und dem Mikrorechner 18 verbunden ist. Eine Fehlerüberwachung kann bevorzugt dadurch erfolgen, daß die Zählerstände auf eine bestimmte höchstzulässige Differenz von beispielsweise einigen Bits überwacht werden. In einer Ausführungsform mit 3 oder mehreren Kanälen kann der Kanal mit einem gegenüber den übrigen Kanälen abweichendem Zählerstand von der Positionsbestimmung ausgeschlossen werden. Durch die Auslegung mit mindestens zwei hochauflösenden Kanälen bleibt bei einem derartigen Fehler vorteilhafterweise immer - unter der Vorraussetzung, daß kein seltener Doppelfehler vorliegt - mindestens ein hochauflösender Kanal zur Verfügung.

Die Fehlererkennungsschaltung ist zusätzlich vorzugsweise mit einer Unter- und Überspannungserkennung ausgestattet. Hierdurch lassen sich Fehler, wie Kabelbruch, defekte Treiberstufe im Sensor, etc., die zu einer Unterspannung führen können und Fehler, wie Kurzschlüsse gegen die Batterie oder die Versorgungsspannung etc, die zu einer Überspannung führen können, erkennen.

Zur Verringerung der Empfindlichkeit gegenüber Signalstörungen wird das Bezugspotential in jedem Kanal parallel zu den

Signalleitungen über eine nichtgezeichnete zusätzliche Leitung zur Empfangsschaltung geführt. Da sich in diesem Fall eingekoppelte Störungen im wesentlichen gleichermaßen auf die Leitungen für das Bezugspotential und das Signal aufteilen (Gleichtaktstörungen), können diese in der Eingangsstufe der Empfangsschaltung mittels einer jeweils pro Kanal vorgesehenen differentiellen Eingangsstufe 43,44,45 herausgefiltert werden.

Im schlafenden Modus ist der Eingangskomparator 27, das digitale Filter 33, der Zähler 15 und die Weckeinrichtung 46 angeschaltet. Zur Umschaltung der Eingangsschaltung vom schlafenden Modus in den voll aktivierten Betriebsmodus (wake-up), bei dem insbesondere die Stromquelle des Wake-Up Kanals, die Fehlererkennungsschaltung 24 und der Mikrorechner 18 eingeschaltet sind, wird in Kanal A das Eingangssignal durch die Weckeinrichtung 46 auf einen Signalimpuls überwacht. Kanal A ist dazu in beiden Betriebszuständen mit der Stromversorgung 47 verbunden. Eine niedrige Stromaufnahme wird erzielt durch eine verlangsamte Taktung des digitalen Eingangsfilters 33. Es ist aber auch möglich, die Schaltung so auszulegen, daß im schlafenden Modus das digitale Filter ausgeschaltet ist. Dies ist dann aus Gründen der Einfachheit zu bevorzugen, wenn die Anschaltverzögerung des digitalen Filters so gering ist, daß die restliche verbleibende Zeit zur Erkennung eines gerade empfangenen Signalimpulses, bei der das digitale Filter läuft, genügt, einen Impuls von einem Störsignal zu unterscheiden. Für diese Ausführungsform ist es besonders zweckmäßig, wenn die weiter oben beschriebene zweistufige Weckschaltung eingesetzt wird.

Bei dem erstgenannten Ausführungsbeispiel mit Frequenzumschaltung des digitalen Filters ergibt sich durch die verringerte Taktung im schlafenden Betrieb eine deutlich verringerte Ortsauflösung. Diese ist jedoch zur Erkennung eines Ereignisses noch ausreichend. Der oder die weiteren Kanäle B' und C' besitzen aufgrund der höheren Taktung der Digitalfilter 34 und 35 eine höhere Ortsauflösung, diese sind jedoch nur im aktivierten Betriebsmodus aktiv. Wird durch die Weckeinrichtung 46 ein zum Wecken zulässiges Signal erkannt, werden die hochauflösenden Kanäle durch Einschalten der für die Kanäle vorgesehenen Stromquellenkanäle 48 in der Stromversorgung 47 aktiviert. Zusätzlich zur Aktivierung der Kanäle B' und C' wird auch die Stromquelle von Kanal A' eingeschaltet. Durch die Weckeinrichtung wird besonders bevorzugt auch zusätzlich das Steuergerät für die Bremsanlage aktiviert.

Die Empfangsschaltung umfaßt weiterhin ein mit den Zählern 15, 16 und 17 verbundenes Schaltungsmodul zur Ermittlung der Pedalbeschleunigung in Echtzeit (Timer-Input-Capture), welches vom Mikrorechner 18 ausgelesen werden kann.

Ein gültiges Wecksignal, welches die Weckeinrichtung zum Aktivieren der Kanäle B' und C' veranlaßt hat, kann aufgrund des Zeitbedarfs des Aktivierungsvorgangs nicht mehr vollständig in den Kanälen B' und C' verarbeitet werden. Hierdurch ergibt sich in den Zählern der Kanäle B' und C' eine Unschärfe bezüglich der Ausgangsposition des Bremspedals. Diese ist allerdings nicht größer, als die Ortsauflösung der Impulserkennung in Kanal A, A'.

Eine im Vergleich zu dem in der Fig. 5 dargestellten System mit drei Kanälen kostengünstigere Ausführungsform stellt das hier beschriebene System mit lediglich zwei Kanälen dar. Bei diesem System ist ein erster Kanal als niedrigauflösender Kanal mit Weckeinrichtung konzipiert und ein zweiter Kanal als ein im schlafenden Betrieb ausgeschalteter hochauflösender Kanal, der vom ersten Kanal geweckt werden kann. Im Zweikanalsystem ist ebenfalls eine Fehlerüberwachung möglich, allerdings beschränkt sich diese bei einem Vergleich der Positionszählerstände auf die dem niedrigauflösenden Zähler im ersten Kanal vorhandenen Bits. Ein Fehler wird dementsprechend später erkannt, als bei einem System mit 3 oder mehreren Kanälen. Tritt eine Differenz der Zählerstände im hier beschriebenen Zweikanalsystem auf, wird das Bremssystem - falls es sich um eine elektrohydraulische Bremse handelt - auf den hydraulischen Notbremsbetrieb umgeschaltet. Es ist auch möglich, z.B. bei Einsatz des Systems in Bremssystemen ohne hydraulischen Notbremsbetrieb, einen Notbetrieb ohne Redundanz mit nur einem Sensor aufrechtzuerhalten. Ein entsprechender Notbetrieb ist auch mit einem ausschließlich korrekt arbeitendem niedrigauflösenden Kanal möglich, allerdings ist dann eine Anforderung der Bremswirkung nur in vergleichsweise groben Stufen möglich.

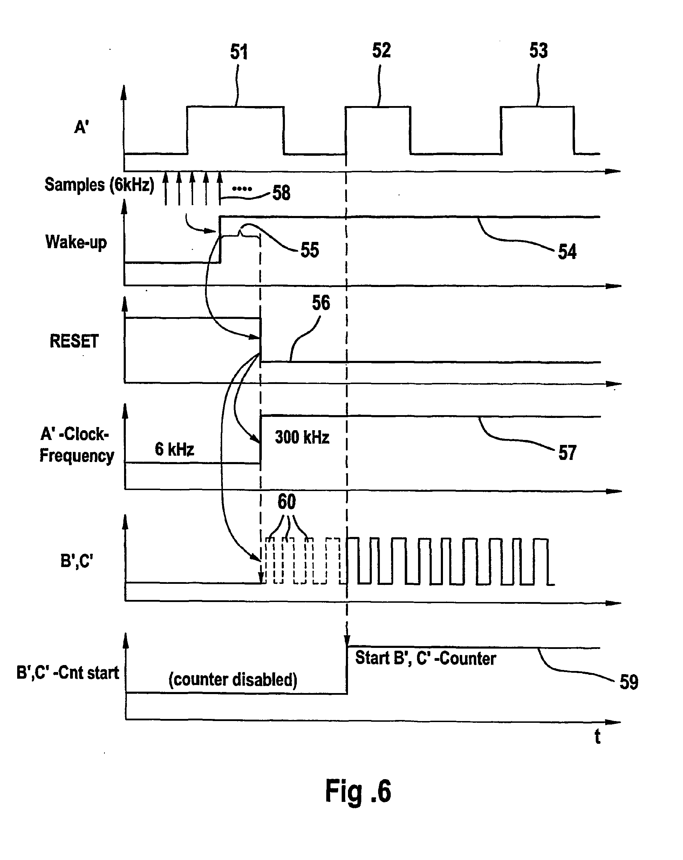

In Fig. 6 ist die zeitliche Abfolge der Signale in der Empfangsschaltung von Fig. 5 dargestellt, die nach dem Eintreffen eines gültigen Weckimpulses 51 in Kanal A' erzeugt werden. Bei einer weiteren Bewegung des Pedalgebers folgen auf der Signalleitung von Kanal A' weitere Impulse 52 und 53. Der dem Kanal A' zugeordnete Zähler 15 (Fig. 5) ist dauerhaft eingeschaltet, so daß dieser die aktuelle Position des Bremspedals in der geringeren Ortsauflösung wiedergibt. Nach einem Weckimpuls in Kanal A oder einem externen Wecksignal wird die Empfangsschaltung aus dem schlafenden in den aktiven Modus über das auf "high"-Setzen des Wecksignals 54 übergeführt. Signal 54 aktiviert die Spannungsversorgung auf der Empfangsschaltung und des Steuergeräts. Nach drei aufeinander folgenden Abtastzyklen 58 im digitalen Filter 33 (Fig. 5) wird der Puls 51 als gültiges Wecksignal erkannt. Sobald die Spannungsversorgung nach einer Zeitspanne 55 bereit ist, wird das RESET-Signals 56 von "high" auf "low" gesetzt. Mittels dieses Signals wird der Takt der Abtastung in Filter 33 von 6 kHz auf 300 kHz erhöht. Diese Frequenzerhöhung wird durch einen Übergang auf "high" mittels Signal 57 angezeigt. Die Impulse 60 in den Kanälen B' und C' sind schmaler, da diese Kanäle eine höhere Auflösung als Kanal A' besitzen. Danach wird der Wert aus dem Zähler 15 von Kanal A' in die entsprechenden höherwertigen Bits (MSBs) der Zähler 16, 17 in den Kanälen B' und C' eingetragen. Nach der Übertragung der Zählerstände dürfen die Zähler 16,17 nicht sofort zu zählen beginnen, da sich das Bremspedal durch die Filterzeit an einer auflösungsbedingt unbestimmten Position zwischen zwei Ortsmarken des Zählers 13 befindet. Aufgrund der Tatsache, daß die Position des Bremspedals nur zu dem Zeitpunkt genau bestimmt ist, an dem eine Pulsflanke von Zähler 15 vorliegt, werden die Zähler 16 und 17 erst gestartet, wenn eine RESET-Flanke auf Signal 55 erfolgt ist und in Kanal A' eine Flanke eines auf den Weckimpuls 51 folgenden Impulses 52 registriert wird.

Wie bereits weiter oben erläutert, führt der niedrigere Takt des Filters in Kanal A' im schlafenden Modus zu einem verringerten Stromverbrauch. Eine Erkennung eines Weckimpulses ist mit dem niedrigen Takt möglich, da die Pulse und Pausenzeiten der vom Positionsgeber in Kanal A erzeugten Signale länger sind, als in den Kanälen B' und C'. Im Betrieb bei voll aktiviertem Empfangsgerät muß jedoch der Takt der Abtastfrequenz in Kanal A' auf den Takt der Kanäle B' und C' angehoben werden, so daß keine Laufzeitunterschiede bei der Triggerung der Zähler auftreten, welche zu unterschiedlichen Zählerständen führen würden.

## Patentansprüche

1. System zur sicheren Übertragung der Position eines Betätigungselements (6) an eine elektronische Verarbeitungseinheit (14) über elektrische Signalleitungen (7,8,9), wobei das Positionssignal über mehrere Signalkanäle (A,A',B,B',C,C') übertragen wird, **dadurch gekennzeichnet, dass** das System unterschiedliche Betriebszustände einnehmen kann, wobei sich die Betriebszustände durch einen unterschiedlichen Energieverbrauch voneinander unterscheiden.

2. System nach Anspruch 1, **dadurch gekennzeichnet, dass** zumindest ein Signalkanal (A,A') eine niedrigere Ortsauflösung besitzt, als der oder die weiteren Signalkanäle (B,B',C,C') .

3. System nach Anspruch 1 oder 2, **dadurch gekennzeichnet, dass** einzelne (15,46) oder alle Funktionsgruppen eines ersten Kanals (A') im Zustand mit niedrigerem Energieverbrauch aktiv bzw. eingeschränkt aktiv sind, und diese Funktionsgruppen mit niedrigem Energieverbrauch Weckmittel (46,38) aufweisen, mit denen einzelne oder alle Funktionsgruppen weiterer Kanäle (B',C') in einen Zustand mit höherem Energieverbrauch versetzt werden können.

4. System nach mindestens einem der Ansprüche 1 bis 3, **dadurch gekennzeichnet, dass** die über die Signalleitungen übertragenen Signale durch einen Positionsgeber (13) erzeugt werden und diese Signale mit einer Empfangseinrichtung (14) empfangen werden.

5. System nach Anspruch 4, **dadurch gekennzeichnet, dass** der Positionsgeber (13) zum Senden der Positionssignale über die mehreren Kanäle (A,B,C) ausgebildet ist und der Positionsgeber (13) mindestens einen von einem Betätigungselement (6) relativ zu einem oder mehreren Magnetwandlern (3) verschiebbaren magnetischen Encoder (1) umfasst, wobei der Encoder entlang der Verschiebungsrichtung magnetische Zonen (10) aufweist, wobei der oder die Magnetwandler gemeinsam mit einer vollständig oder teilweise integrierten elektronischen Signalaufbereitungsschaltung (4,5) in einer elektronischen Sensorbaugruppe (2,40) angeordnet sind und die Signalaufbereitungsschaltung in Abhängigkeit von der Position des Betätigungselements codierte Signale (12,26) an einer oder mehreren der elektrischen Signalleitungen (7,8,9) bereitstellt, wobei die Signale (12,26) impulscodiert sind und wobei ein Impuls erzeugt wird, wenn sich die Position des Betätigungselements entsprechend der Breite einer Zone (10) des Encoders verändert hat.

6. System nach Anspruch 5, **dadurch gekennzeichnet, dass** der Positionsgeber so ausgebildet ist, dass bei einer Bewegung des Betätigungselements in eine erste Richtung (11) Impulse einer ersten Sorte (12) gesendet werden und bei einer Bewegung des Gebers in eine zweite Richtung (25) Impulse einer weiteren Sorte (26) gesendet werden, wobei sich die Impulse der einzelnen Sorten durch deren Impulsform unterscheiden.

7. System nach mindestens einem der Ansprüche 4 bis 6, **dadurch gekennzeichnet, dass** die Empfangseinrichtung (14) zum Empfangen des über mehrere elektrische Leitungen (7,8,9) übertragenen Positionssignals des Positionsgebers (13) ausgebildet ist, wobei die Empfangseinrichtung mehrere Verarbeitungskanäle (A',B',C') jeweils mit Signaleingängen zur Verarbeitung von jeweils einem Positionssignal umfasst und wobei in den Verarbeitungskanälen jeweils Zähler zum Zählen von über die Leitung übertragbarer Signalpulse (15,16,17) vorhanden sind.

8. System nach Anspruch 7, **dadurch gekennzeichnet, dass** jeweils pro Kanal mindestens eine mit den Zählern verbundene Impulsunterscheidungseinrichtung (27,28,29) vorhanden ist, so dass die Zähler aufwärts respektive abwärts gezählt werden, wenn Pulse einer ersten Sorte (12) empfangen werden und die Zähler abwärts respektive aufwärts gezählt werden, wenn Impulse einer zweiten Sorte (26) empfangen werden.

9. System nach Anspruch 7 oder 8, **dadurch gekennzeichnet, dass** eine zweistufige Weckschaltung (46) vorgesehen ist, welche bei Eingang eines Impulses zunächst die ersten Stufe der Weckeinrichtung vorläufig weckt, nicht jedoch die zweite Stufe der Weckschaltung (46), und die erste Stufe Mittel zur vorläufigen Auswertung des Eingangssignals hinsichtlich der Erkennung eines zum Wecken gültigen Eingangssignals aufweist und Mittel zum Anschalten der zweiten Stufe, wenn die erste Stufe einen gültigen Impuls erkannt hat, und die zweite Stufe Mittel (33) aufweist, mit denen eine endgültige Überprüfung auf einen gültigen Weckimpuls vorgenommen werden kann.

10. System nach mindestens einem der Ansprüche 4 bis 9, **dadurch gekennzeichnet, dass** das System eine Überwachungsschaltung (24) umfaßt, die insbesondere auf der Empfangseinrichtung (14) angeordnet ist, welche einige ausgewählte Systemfunktionen überwacht und in Abhängigkeit vom Ergebnis der Überwachung einen Notbetrieb oder eine Abschaltung des Systems hervorruft.

11. System nach mindestens einem der Ansprüche 4 bis 10, **dadurch gekennzeichnet, dass** die Ausgangsstufen des Positionsgebers und die Eingangsstufen der Empfangseinrichtung bezüglich einer gemeinsamen Strom-/Spannungsversorgung ratiometrisch zueinander aufgebaut sind.

12. System nach mindestens einem der Ansprüche 4 bis 11, **dadurch gekennzeichnet, dass** die in den Kanälen des Positionsgebers vorgesehenen Funktionsgruppen (3,43,50) von jeweils einer von der Empfangseinrichtung gespeisten Strom-/Spannungsversorgungsleitung (21,22,23) gespeist werden.

13. System nach mindestens einem der Ansprüche 4 bis 12, **dadurch gekennzeichnet, dass** eine oder mehrere Offseteinrichtungen (30,31,32,50) vorhanden ist, mit der auf die Signalleitung ein Offsetpegel eines Stroms und/oder einer Spannung zur Erkennung von Sensorfehlern oder Signalleitungsfehlern und/oder zur Filterung von Signalstörungen aufgeprägt werden kann.

14. Verwendung des Systems nach einem der Ansprüche 1 bis 13 in einer Kraftfahrzeugbremsanlage, in der die Positionssignale eines Bremspedals überwiegend mittels elektrischer Signale an eine Bremsensteuerungseinrichtung übertragen werden.

## Claims

1. System for reliably transmitting the position of an actuating element (6) to an electronic processing unit (14) via electrical signal lines (7, 8, 9), the position signal being transmitted via a plurality of signal channels (A,A', B,B', C,C'), **characterized in that** the system can assume different operating states, the operating states differing from one another by virtue of a different energy consumption.

2. System according to Claim 1, **characterized in that** at least one signal channel (A,A') has a lower spatial resolution than the further signal channel (s) (B,B', C,C').

3. System according to Claim 1 or 2, **characterized in that** individual functional groups (15, 46) or all functional groups of a first channel (A') are active or are active to a limited extent in the state with a lower energy consumption, and these functional groups with a low energy consumption have wake-up means (46, 38) which can be used to change individual functional groups or all functional groups of further channels (B', C') to a state with a higher energy consumption.

4. System according to at least one of Claims 1 to 3, **characterized in that** the signals transmitted via the signal lines are generated by a position transmitter (13) and these signals are received using a receiving device (14).

5. System according to Claim 4, **characterized in that** the position transmitter (13) is designed to transmit the position signals via the plurality of channels (A, B, C) and the position transmitter (13) comprises at least one magnetic encoder (1) which can be displaced by an actuating element (6) relative to one or more magnetic transducers (3), the encoder having magnetic zones (10) along the displacement direction, the magnetic transducer(s) being arranged, together with a fully or partially integrated electronic signal conditioning circuit (4, 5), in an electronic sensor assembly (2, 40), and the signal conditioning circuit providing signals (12, 26) coded on the basis of the position of the actuating element on one or more of the electrical signal lines (7, 8, 9), the signals (12, 26) being pulse-coded, and a pulse being produced if the position of the actuating element has changed in a manner corresponding to the width of a zone (10) of the encoder.

6. System according to Claim 5, **characterized in that** the position transmitter is designed in such a manner that pulses of a first type (12) are transmitted if the actuating element moves in a first direction (11) and pulses of a further type (26) are transmitted if the transmitter moves in a second direction (25), the pulses of the individual types differing in terms of their pulse shape.

7. System according to at least one of Claims 4 to 6, **characterized in that** the receiving device (14) is designed to receive the position signal from the position transmitter (13), which signal is transmitted via a plurality of electrical lines (7, 8, 9), the receiving device comprising a plurality of processing channels (A', B', C') each with signal inputs for processing one position signal each, and counters for counting signal pulses (15, 16, 17) which can be transmitted via the line being present in each of the processing channels.

8. System according to Claim 7, **characterized in that** at least one pulse discrimination device (27, 28, 29) connected to the counters is respectively present for each channel, with the result that the counters are incremented or decremented if pulses of a first type (12) are received and the counters are decremented or incremented if pulses of a second type (26) are received.

9. System according to Claim 7 or 8, **characterized in that** a two-stage wake-up circuit (46) is provided, which circuit first of all temporarily wakes up the first stage of the wake-up device when a pulse is received but not the second stage of the wake-up circuit (46), and the first stage has means for provisionally evaluating the input signal with respect to the detection of an input signal valid for wake-up and means for switching on the second stage if the first stage has detected a valid pulse, and the second stage has means (33) which can be used to definitively check for a valid wake-up pulse.

10. System according to at least one of Claims 4 to 9, **characterized in that** the system comprises a monitoring circuit (24) which is arranged, in particular, on the receiving device (14), monitors some selected system functions and causes an emergency mode or disconnection of the system on the basis of the monitoring result.

11. System according to at least one of Claims 4 to 10, **characterized in that** the output stages of the position transmitter and the input stages of the receiving device are constructed in a ratiometric manner with respect to one another as regards a common current/voltage supply.

12. System according to at least one of Claims 4 to 11, **characterized in that** the functional groups (3, 43, 50) provided in the channels of the position transmitter are fed by a respective current/voltage supply line (21, 22, 23) fed by the receiving device.

13. System according to at least one of Claims 4 to 12, **characterized in that** there are one or more offset devices (30, 31, 32, 50) which can be used to impress an offset level of a current and/or a voltage on the signal line for the purpose of detecting sensor faults or signal line faults and/or for the purpose of filtering signal interference.

14. Use of the system according to one of Claims 1 to 13 in a motor vehicle braking system, in which the position signals from a brake pedal are predominantly transmitted to a brake control device by means of electrical signals.

## Revendications

1. Système pour la transmission sécurisée de la position d'un élément d'actionnement (6) à une unité de traitement électronique (14) par l'intermédiaire de lignes électriques d'acheminement de signaux (7, 8, 9), le signal de position étant transmis via plusieurs canaux de signalisation (A, A', B, B', C, C'), **caractérisé en ce que** le système peut adopter différents états de fonctionnement, les états de fonctionnement se distinguant les uns des autres grâce à une consommation d'énergie différente.

2. Système selon la revendication 1, **caractérisé en ce qu'**au moins un canal de signalisation (A, A') possède une résolution locale plus basse que le ou les autres canaux de signalisation (B, B', C, C').

3. Système selon la revendication 1 ou 2, **caractérisé en ce que** des groupes fonctionnels individuels (15, 46) ou tous les groupes fonctionnels d'un premier canal (A') sont actifs, ou actifs de manière restreinte, à l'état de consommation d'énergie plus basse, et **en ce que** ces groupes fonctionnels à consommation d'énergie basse présentent des moyens de stimulation (46, 38) avec lesquels il est possible de faire passer des groupes fonctionnels individuels ou tous les groupes fonctionnels d'autres canaux (B', C') à un état à consommation d'énergie plus élevée.

4. Système selon l'une au moins des revendications 1 à 3, **caractérisé en ce que** les signaux transmis via les lignes d'acheminement de signaux sont générés par un indicateur de position (13) et **en ce que** ces signaux sont réceptionnés avec un dispositif de réception (14).

5. Système selon la revendication 4, **caractérisé en ce que** l'indicateur de position (13) est réalisé pour l'émission des signaux de position via les plusieurs canaux (A, B, C) et **en ce que** l'indicateur de position (13) comprend au moins un codeur magnétique (1) pouvant être déplacé par un élément d'actionnement (6) par rapport à un ou plusieurs convertisseurs magnétiques (3), le codeur présentant des zones magnétiques (10) le long de la direction de déplacement, le ou les convertisseur(s) magnétique(s) étant disposé(s), en commun avec un circuit de traitement de signaux électronique complètement ou partiellement intégré (4, 5), dans un module de détection électronique (2, 40) et le circuit de traitement de signaux, en fonction de la position de l'élément d'actionnement, mettant à disposition des signaux codés (12, 26) à l'une ou plusieurs des lignes électriques d'acheminement de signaux (7, 8, 9), les signaux (12, 26) étant soumis à un codage des impulsions et une impulsion étant générée si la position de l'élément d'actionnement a changé de manière correspondante à la largeur d'une zone (10) du codeur.

6. Système selon la revendication 5, **caractérisé en ce que** l'indicateur de position est réalisé de manière à ce qu'en cas d'un déplacement de l'élément d'actionnement dans une première direction (11), des impulsions d'une première catégorie (12) sont émises et qu'en cas d'un déplacement de l'indicateur dans une deuxième direction (25), des impulsions d'une autre catégorie (26) sont émises, les impulsions des catégories individuelles se distinguant de par leur forme d'impulsion.

7. Système selon au moins l'une des revendications 4 à 6, **caractérisé en ce que** le dispositif de réception (14) est réalisé pour la réception du signal de position de l'indicateur de position (13) transmis via plusieurs lignes électriques (7, 8, 9), le dispositif de réception comprenant plusieurs canaux de traitement (A', B', C') avec respectivement des entrées de signaux pour le traitement d'un signal de position respectif, et des compteurs pour compter des impulsions de signaux (15, 16, 17) transmises via la ligne étant respectivement présents dans les canaux de traitement.

8. Système selon la revendication 7, **caractérisé en ce qu'**il existe, respectivement pour chaque canal, au moins un dispositif de différenciation des impulsions (27, 28, 29) en liaison avec les compteurs, de sorte que les compteurs sont respectivement comptés de manière incrémentielle ou décrémentielle lorsque des impulsions d'une première catégorie (12) sont réceptionnées, et **en ce que** les compteurs sont respectivement comptés de manière décrémentielle ou incrémentielle lorsque des impulsions d'une deuxième catégorie (26) sont réceptionnées.

9. Système selon la revendication 7 ou 8, **caractérisé en ce que** l'on prévoit un circuit de stimulation à deux étages (46), lequel stimule tout d'abord provisoirement le premier étage du dispositif de stimulation lors de l'entrée d'une impulsion, mais cependant pas le deuxième étage du circuit de stimulation (46), et le premier étage présente des moyens pour l'évaluation provisoire du signal d'entrée en ce qui concerne la reconnaissance d'un signal d'entrée valide pour la stimulation et des moyens pour la mise en circuit du deuxième étage lorsque le premier étage a reconnu une impulsion valide, et le deuxième étage présente des moyens (33) avec lesquels il est possible de procéder à une vérification définitive concernant une impulsion de stimulation valide.

10. Système selon au moins l'une des revendications 4 à 9, **caractérisé en ce que** le système comprend un circuit de surveillance (24), lequel est en particulier disposé sur le dispositif de réception (14), lequel surveille quelques fonctions système sélectionnées et provoque un fonctionnement d'urgence ou un arrêt du système en fonction du résultat de la surveillance.

11. Système selon au moins l'une des revendications 4 à 10, **caractérisé en ce que** les étages de sortie de l'indicateur de position et les étages d'entrée du dispositif de réception sont réalisés de manière ratiométrique les uns par rapport aux autres concernant une alimentation en courant/tension commune.

12. Système selon au moins l'une des revendications 4 à 11, **caractérisé en ce que** les groupes fonctionnels (3, 43, 50) prévus dans les canaux de l'indicateur de position sont respectivement alimentés par une ligne d'alimentation en courant/tension (21, 22, 23) alimentée par le dispositif de réception.

13. Système selon au moins l'une des revendications 4 à 12, **caractérisé en ce qu'**il existe un ou plusieurs dispositif(s) offset (30, 31, 32, 50) avec lequel il est possible de conférer à la ligne d'acheminement de signaux l'empreinte d'un niveau d'offset d'un courant et/ou d'une tension pour la reconnaissance d'erreurs de capteurs ou d'erreurs de lignes d'acheminement de signaux et/ou pour le filtrage de perturbations de signaux.

14. Utilisation du système selon l'une des revendications 1 à 13 dans un dispositif de freinage de véhicule automobile, dans lequel les signaux de position d'une pédale de frein sont transmis essentiellement à l'aide de signaux électriques à l'attention d'un dispositif de commande de freinage.
